(19) **Europäisches Patentamt / European Patent Office / Office européen des brevets**

(11) **EP 2 295 944 A2**

(12) # EUROPEAN PATENT APPLICATION

(43) Date of publication:
**16.03.2011 Bulletin 2011/11**

(21) Application number: **10250162.4**

(22) Date of filing: **29.01.2010**

(51) Int Cl.:
***G01K 7/01*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **09.09.2009 EP 09169808**

(71) Applicant: **NXP B.V.**
**5656 AG Eindhoven (NL)**

(72) Inventors:
• **Sebastiano, Fabio**
  **Redhill, Surrey RH1 1DL (GB)**
• **Makinwa, Kofi Afolabi Anthony**
  **Redhill, Surrey RH1 1DL (GB)**

(74) Representative: **Ashton, Gareth Mark**
  **NXP Semiconductors**
  **Intellectual Property and Licensing Department**
  **Betchworth House**
  **57-65 Station Road**
  **Redhill, Surrey RH1 1DL (GB)**

(54) **Temperature sensor**

(57)   The invention relates to temperature sensors, in particular to on-chip temperature sensors in CMOS integrated circuits using diode-connected bipolar junction transistors as temperature sensing elements, and discloses a temperature sensor module (400) comprising a temperature sensing circuit (107) comprising first and second bipolar junction transistors (402), a bias circuit (106) connected to the first and second transistors and configured to provide first and second bias currents to the first and second transistors respectively, a conversion circuit (108) connected to the transistors and configured to provide an output signal corresponding to a temperature of the first and second transistors derived from the base-emitter voltages across the first and second transistors, wherein the first and second transistors are each of NPN type and a feedback amplifier (403) is connected between the base and collector connections of each transistor.

Fig. 4

EP 2 295 944 A2

**Description**

The invention relates to temperature sensors, and in particular to on-chip temperature sensors in CMOS integrated circuits, using diode-connected bipolar junction transistors as temperature sensing elements.

Temperature sensors are used in a wide range of applications, such as instrumentation, control systems and temperature monitoring of digital processors. Low-cost sensors can be realized in CMOS technology through exploiting the temperature characteristics of parasitic bipolar transistors, as described in further detail in references 1-4 listed below. The principle of operation of such sensors relies on two nominally identical diodes D1 and D2 being respectively biased with currents $I_1$ and $I_2$, such that $I_1/I_2 = n$ is constant. The voltage drop $V_1$ across a diode through which a bias current $I_1$ is being passed is given by:

$$V_1 = \frac{kT}{q} \ln\left(\frac{I_1}{I_S}\right) \qquad (1)$$

where $k$ is the Boltzmann constant, q the electron charge, $T$ the absolute temperature and $I_s$ the transistor's saturation current. The difference $V_{diff}$ of the voltage drops $V_1$, $V_2$ across two diodes having respective bias currents $I_1$, $I_2$ is given by:

$$V_{diff} = V_1 - V_2 = \frac{kT}{q} \ln(n) \qquad (2)$$

This voltage difference $V_{diff}$ is proportional to absolute temperature (PTAT). If the voltage difference $V_{diff}$ is compared to a constant reference voltage and then digitized, a PTAT digital output is obtained, which provides an indication of the absolute temperature of the two diodes.

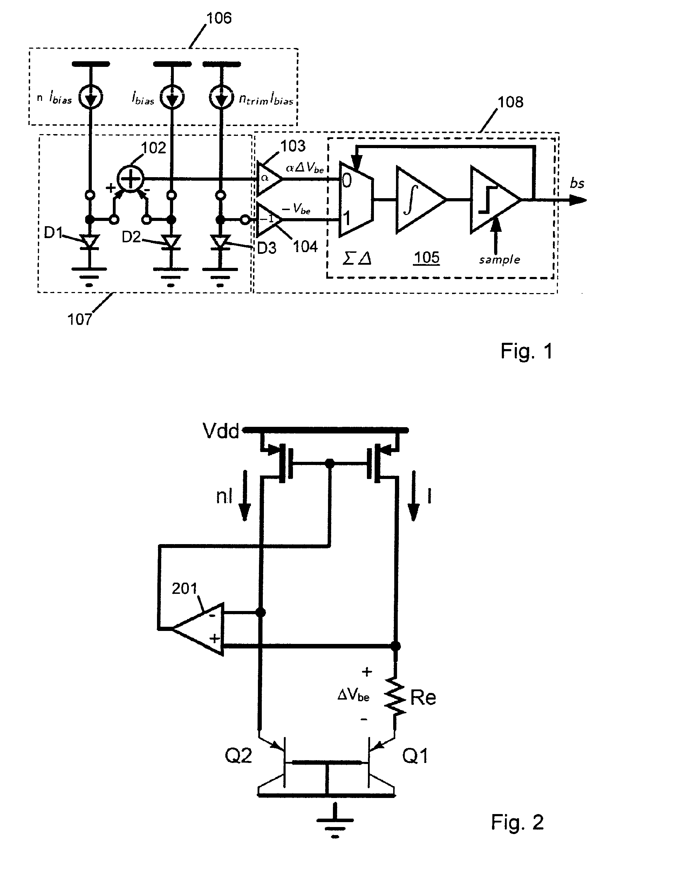

The analog-to-digital conversion is not usually performed by directly comparing $V_{diff}$ to a constant reference voltage, but by using a charge-balancing conversion, as described in references 3 & 4. Figure 1 illustrates the operating principle of a charge balancing conversion. A bias circuit 106 generates a supply-independent PTAT current $I_{bias}$ to a temperature sensing circuit 107. The temperature sensing circuit 107 provides an output signal to a conversion circuit 108, which processes and converts the output signal to a digital form. The bias current is used to bias a pair of diodes D1, D2 at a $n$:1 collector current ratio. The resulting voltages across each diode are provided to a comparator 102, which outputs a differential voltage $\Delta V_{be}$ that is PTAT. This differential voltage is provided to an amplifier 103, which amplifies the signal by a factor $\alpha$ to provide a differential voltage signal $\alpha\Delta V_{be}$. A third diode D3 is provided with a bias current $n_{trim}I_{bias}$, where $n_{trim}$ is a calibration factor. A voltage $V_{be}$ across diode D3 is inverted by means of an inverter 104 to produce a voltage signal $-V_{be}$ that is complementary to absolute temperature (CTAT). A 1st order sigma-delta ($\Sigma\Delta$) analogue to digital converter (ADC) 105 receives the voltage signals $\alpha\Delta V_{be}$ and $-V_{be}$. The ADC 105 integrates $-V_{be}$ when an input bitstream value bs = 1 and integrates $\alpha\Delta V_{be}$ when bs = 0. The result of this is that the bitstream average value $\mu$ is given by $\mu=\alpha\Delta V_{be}/(V_{be}+\alpha\Delta V_{be})$ [3]. With the appropriate choice of $\alpha$ ($\alpha=\alpha_{PTAT}$), the denominator $V_{be} + \alpha\Delta V_{be}$ can be made to be approximately constant over temperature, resulting in the value $\mu$ being PTAT [3].

While the differential voltage $\alpha\Delta V_{be}$ does not depend on the absolute value of the bias current but only on the ratio n, $V_{be}$ is strongly dependent on the bias current $I_{bias}$ and the saturation current of the bipolar transistor, as indicated in equation (1) above. The spread of the bias current $I_{bias}$ and saturation currents of each diode results in a spread in $V_{be}$, which consequently affects the precision of the temperature sensor. It can be shown that, if the spread of $V_{be}$ is PTAT, a single-temperature trim is sufficient to compensate for the spread of the sensor over the whole temperature range [3]. A single-temperature trim will increase the sensor accuracy, but will tend to increase production costs. If only a room temperature trim were to be needed, the additional small cost involved could be tolerated in most applications.

Temperature sensors in CMOS technology according to references 1-4 all use diodes implemented using parasitic diode-connected vertical PNP bipolar transistors. The voltage drop $V_{be}$ across such a diode-connected transistor will be dependent on the current gain of the transistor $\beta$, according to the following relationship:

$$V_{be} = \frac{kT}{q} \ln\left(\frac{n_{trim}I_{bias}}{I_S} \frac{\beta}{\beta+1}\right) \qquad (3)$$

In deep-submicron CMOS technologies, the current gain β of parasitic bipolar transistors approaches unity. Consequently $V_{be}$ will become more strongly dependent on the current gain. Since β is temperature-dependent, the finite current gain will tend to cause an error in $V_{be}$ that is not PTAT and that cannot be compensated by a single-temperature trim.

The bias current required to bias the diodes in a temperature sensor ($I_{bias}$ in figure 1) must be supply-independent. This is usually achieved by forcing a PTAT voltage drop on a resistor, since it is easy to obtain a PTAT supply-independent differential voltage $\Delta V_{be}$ from two diodes. A PTAT current is also commonly needed for a bandgap-based voltage reference, where a PTAT current is summed with a CTAT current to obtain an approximately temperature-independent current.

When using parasitic vertical PNP transistors to generate a PTAT voltage, the collector connection of each of the bipolar transistors is connected to the chip substrate and consequently to ground. With this constraint, a typical topology adopted is as illustrated in figure 2. The operational amplifier 201 ensures that the difference of the base-emitter voltages of PNP transistors Q1 and Q2 drops across resistor Re. The offset at the input of the amplifier 201 directly sums up to $\Delta V_{be}$ and affects the accuracy of the PTAT current. Offset-compensation techniques, such as chopping or correlated double sampling, as for example disclosed in reference 3, must consequently be adopted, causing an increase in complexity and power consumption.

It is an object of the invention to address one or more of the above mentioned problems.

According to a first aspect of the invention there is provided a temperature sensor module for a CMOS integrated circuit, the temperature sensor module comprising:

a temperature sensor circuit comprising first and second bipolar junction transistors;
a bias circuit connected to the first and second transistors and configured to provide first and second bias currents to the first and second transistors respectively;
a conversion circuit connected to the transistors and configured to provide an output signal corresponding to a temperature of the first and second transistors derived from the base-emitter voltages across the first and second transistors,
wherein the first and second transistors are each of NPN type and a feedback amplifier is connected between the base and collector connections of each transistor.

Unlike vertical PNP transistors used in previous temperature sensing circuits, NPN transistors can be directly and accurately biased via their collectors. This allows for the generation of a base-emitter voltage that it is not dependent on the current gain. This reduces the spread in the base-emitter voltage and consequently the spread of the output of the temperature sensor, thereby improving accuracy. This can also significantly relax the requirements on the bias circuit in terms of accuracy and required supply voltage.

The feedback amplifier connected to each of the first and second transistors functions firstly to provide compensation for the base current of the transistors and secondly to boost the output impedance of the transistors so that the system is more robust to supply voltage variations.

The conversion circuit may comprise a ΣΔ converter connected to the base connections of the first and second transistors. The base connections of the first and second transistors may be connected to respective first and second inputs of the ΣΔ converter.

The temperature sensor module may comprise first and second switches connected between the base and emitter connections of the first and second transistors respectively. These switches allow the voltages across the first and second transistors to be used in either differential or single sided modes, which removes the need for a further transistor to provide a static reference temperature voltage.

The converter may be configured to alternate the sign of an input common-mode voltage in successive sampling cycles.

The converter may be configured to integrate over a shorter length of time when switching inputs between base-emitter voltages of the first and second transistors than when switching between the base-emitter voltage of one of the transistors and 0V. Using different integration times allows the overall time taken for a temperature measurement to be reduced.

The temperature sensor may comprise a PMOS transistor and further bipolar junction NPN transistor connected between the output of each amplifier and the emitter of each of the first and second transistors.

The bias circuit connected to the first and second transistors may be configured to provide first and second bias currents that are proportional to absolute temperature.

The bias circuit may comprise third and fourth bipolar junction NPN transistors connected to a cascode current mirror configured to provide collector currents to the third and fourth transistors at a fixed ratio, the emitter of the fourth transistor connected to a resistor to provide a voltage across the resistor that is proportional to absolute temperature.

The conversion circuit may be configured to implement a multiplicative factor when integrating a differential voltage signal from the first and second transistors. In order to implement this multiplicative factor, the conversion circuit may be configured to integrate the differential voltage signal multiple times for each sampling cycle, or alternatively may implement the multiplicative factor by capacitive multiplication. A preferred value for the multiplicative factor may be 2 or 1.

According to a second aspect of the invention there is provided a method of measuring temperature in a temperature sensing module according to the first aspect of the invention, the method comprising:

generating a bias current in the bias circuit;
providing the bias current to the temperature sensing circuit;
receiving the base-emitter voltages across the first and second transistors by the conversion circuit; and
generating an output signal corresponding to a temperature of the first and second transistors derived from the base-emitter voltages across the first and second transistors.

The conversion circuit preferably implements a multiplicative factor when integrating a differential voltage signal from the first and second transistors, either by integrating the differential signal multiple times for each sampling cycle or by implementing the multiplicative factor by capacitive multiplication. A preferred value for the multiplicative factor may be 2 or 1.

According to a third aspect of the invention there is provided a temperature sensor module for a CMOS integrated circuit, the temperature sensor module comprising:

a temperature sensor circuit comprising first and second bipolar junction transistors;
a bias circuit connected to the first and second transistors and configured to provide first and second bias currents to the first and second transistors respectively;
a conversion circuit connected to the transistors and configured to provide an output signal corresponding to a temperature of the first and second transistors derived from the base-emitter voltages across the first and second transistors,
wherein the conversion circuit is configured to implement a multiplicative factor when integrating a differential voltage signal from the first and second transistors. A preferred value for the multiplicative factor may be 2 or 1.

According to a fourth aspect of the invention there is provided a method of measuring temperature in a temperature sensing module according to the third aspect of the invention, the method comprising:

generating a bias current in the bias circuit;
providing the bias current to the temperature sensing circuit;
receiving the base-emitter voltages across the first and second transistors by the conversion circuit; and
generating an output signal corresponding to a temperature of the first and second transistors derived from the base-emitter voltages across the first and second Transistors.

Optional and preferred features relating to the first and second aspects of the invention may also apply to the third and fourth aspects of the invention respectively.

The invention is described in further detail below by way of illustrative exemplary embodiments and with reference to the accompanying drawings, in which:

figure 1 is a circuit diagram of a charge-balancing conversion principle for temperature sensing using a pair of biased diodes;
figure 2 is a circuit diagram of a circuit for generating a bias current that is proportional to absolute temperature (PTAT);
figure 3 is a diagram of an exemplary bias current generating circuit employing NPN transistors;
figure 4 is a circuit diagram illustrating the principle of operation of a temperature sensor using NPN transistors;
figure 5 is a diagram of a bipolar front-end temperature measuring circuit together with a 1st order Sigma-Delta modulator;
figures 6a and 6b are curves of temperature error resulting from quantization error as a function of conversion time for a 1 st order Sigma-Delta modulator using different values of $\alpha$;
figure 7 illustrates a timing diagram and waveforms of part of a temperature conversion process;
figure 8 shows measured temperature errors (within $3\sigma$ limits) for 16 exemplary temperature sensor samples after trimming at 30°C; and
figure 9 is a micrograph of an exemplary integrated circuit embodiment of a temperature sensor according to the invention.

In accordance with one or more embodiments of the invention, parasitic NPN transistors are used in place of PNP transistors for implementing CMOS-based temperature sensors, in particular for deep-submicron technologies. Aspects of the invention are particularly suitable for CMOS-technology nodes of 90nm, 65nm and beyond, i.e. being fabricated on CMOS integrated circuits having a feature size of 90nm, 65nm and smaller. For this purpose, the NPN transistors are fabricated from an n+ drain diffusion (emitter), a p-well (base) and a deep n-well (collector), all of which are standard features in current known deep-submicron semiconductor fabrication processes. Unlike vertical PNP transistors commonly used in temperature sensors, as for example disclosed in references 1-4, NPN transistors can be directly and accurately biased via their collectors, resulting in base-emitter voltages that are independent of their (low) current gain β. This, in turn, significantly relaxes the requirements on the bias circuit generating a PTAT current.

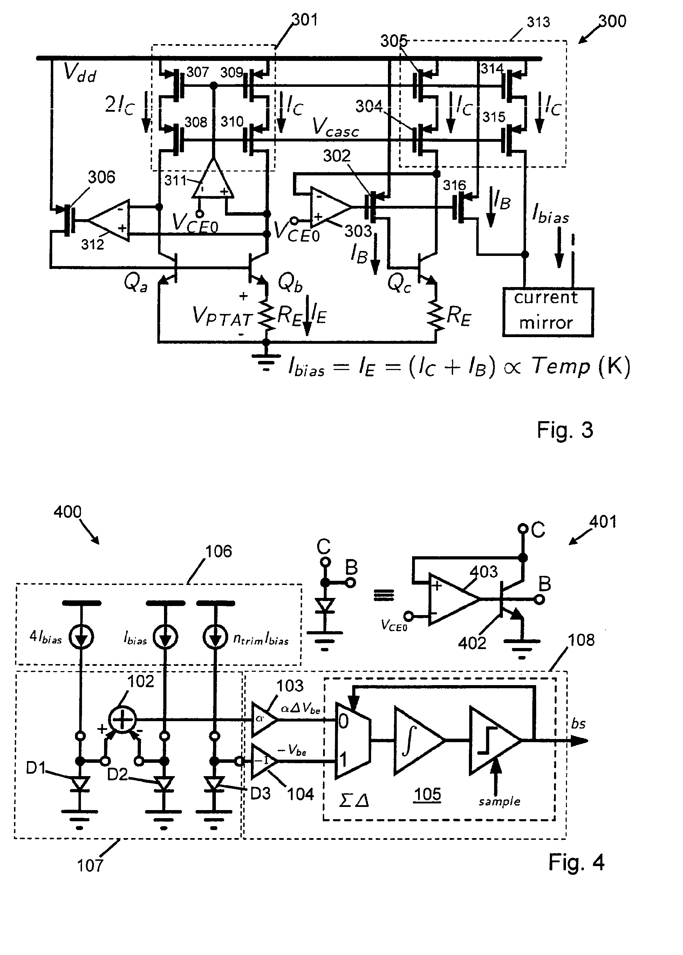

An exemplary bias circuit 300 configured to generate a PTAT bias current using bipolar junction NPN transistors is shown in Fig. 3. Transistors $Q_a$ and $Q_b$ are biased by means of a gain-boosted cascode mirror 301 configured to produce a 2:1 current ratio, forcing a PTAT voltage across resistor $R_E$ and making the emitter current $I_E$ of transistor $Q_b$ supply-independent. The cascode mirror 301 comprises a first pair of PMOS transistors 307, 308 connected between a voltage supply line $V_{dd}$ and the collector of transistor $Q_a$, and a second pair of PMOS transistors 309, 310 connected between the voltage supply line $V_{dd}$ and the collector of transistor $Q_b$. Gates of transistors 307, 309 are connected together, and gates of transistors 308, 310 are connected together. The voltage supply line Vdd is connected to the source of transistors 307, 309, and the drains of transistors 307, 309 are connected to respective sources of transistors 308, 310. Drains of transistors 308, 310 are connected to respective collectors of BJT NPN transistors $Q_a$, $Q_b$.

An amplifier 311 is connected between the collector of transistor Qb and the gates of transistors 307, 309, a (non-inverting) input of the amplifier 311 connected to transistor Qb and an output of the amplifier 311 connected to the gates of transistors 307, 309. A further (inverting) input of amplifier 311 is connected to voltage $V_{CE0}$.

Collectors of transistors Qa, Qb are connected to inputs (inverting and non-inverting, respectively) of amplifier 312, whose output is connected to the gate of PMOS transistor 306. The drain of transistor 306 is connected to base connections of both transistors $Q_a$, $Q_b$, while the source of transistor 306 is connected to voltage supply line $V_{dd}$.

A further cascode mirror 313 comprising PMOS transistors 304, 305, 314, 315 provides current $I_c$ to NPN BJT transistor $Q_c$ and a portion of the bias output current $I_{bias}$. A remaining portion of the bias current $I_{bias}$ is provided by a further PMOS transistor 316, having a source connected to voltage supply line $V_{dd}$ and a drain connected to an output of the circuit 300, common with a drain of PMOS transistor 315.

The base connection of transistor $Q_c$ is connected to a drain of transistor 302. The source of transistor 302 is connected to the voltage supply line, and the gate connected to an output of amplifier 303, having a first (inverting) input connected to the collector of transistor Qc and a second (non-inverting) input connected to voltage $V_{CE0}$.

The output bias current $I_{bias}=I_E$ is derived summing a copy of the current $I_C$ through transistor 309, which is equal to the collector current of transistor $Q_b$, with a copy of the base current of transistor $Q_b$. The copy of the base current of transistor $Q_b$ is generated by the replica circuit around transistor $Q_C$, the replica circuit comprising the components connected to transistor $Q_c$, i.e. resistor $R_E$ connected to the emitter of transistor $Q_c$, PMOS transistor 302 and feedback amplifier 303 connected to the base of transistor $Q_c$, together with 2 PMOS transistors 304, 305 that provide a collector current $I_c$ to the transistor $Q_c$. Unlike PNP-based bias circuits, as for example disclosed in references 3 and 4, the bias circuit shown in figure 3 does not need low-offset amplifiers. This is because the loop comprising the base-emitter junctions of $Q_{a,b}$ and resistor $R_E$ can be directly realized with NPNs but not with substrate PNPs. However, since their base currents are relatively large (β<5), the systematic offset of the amplifiers is minimized by using common-source buffers. The common source buffers in this case comprise the PMOS transistors 302, 306, whose collectors are connected to the base of bipolar transistors $Q_{a-c}$. These PMOS transistors each have their source connected to a common supply voltage $V_{dd}$. The minimum supply voltage of the bias circuit is determined by the mirror compliance (the minimum voltage needed to be provided at the output of a current mirror to ensure its correct working) and the BJT saturation voltage $V_{CE}\sim0.3V$. This minimum supply voltage is much lower than that in PNP-based bias circuits which must accommodate $V_{be}>>V_{CE}$[1-4].

To avoid the aforementioned problems caused by finite current gain in the temperature sensor shown in figure 1, NPN transistors can also be used in place of PNP transistors as temperature sensing elements. A schematic circuit diagram of an embodiment of a temperature sensor module 400 using NPN transistors is illustrated in figure 4. As with the temperature sensor module of figure 1, first and second diodes D1, D2 in the temperature sensing circuit 107 are connected to a bias circuit 106 providing respective first and second bias currents, in this case having a ratio of 4:1, i.e. providing bias currents $4I_{bias}$, $I_{bias}$, although other ratios may be used.

Each diode D1, D2 in figure 4 represents a circuit element 401 comprising an NPN transistor 402 together with a feedback amplifier 403 connected between the base and collector nodes of the transistor 402. An output of the feedback amplifier 403 is connected to the base of the transistor 402, and a non-inverting input of the amplifier 403 is connected to the collector of the transistor 402. An inverting input of the feedback amplifier 402 is connected to $V_{CE0}$. The voltage $V_{CE0}$ is a reference voltage that is high enough to ensure that the NPN transistors are biased in their active forward conduction region. If $V_{CE0}$ is independent from the supply voltage, this can help to improve the supply rejection of the circuit. Other components of the temperature sensor 400 are similar to those described in figure 1, and are identified by corresponding reference signs.

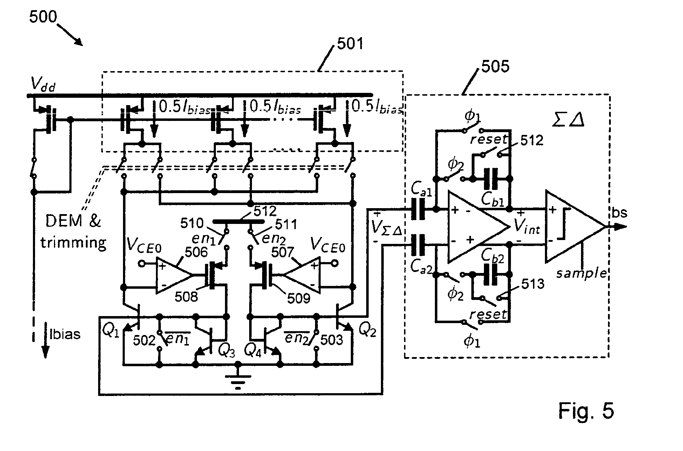

A detailed embodiment of a temperature sensor circuit 500 is shown in the circuit diagram of figure 5. Transistors $Q_1$ and $Q_2$, corresponding to the transistors 402 of figure 4, are biased by a switchable array of n current sources 501, the currents deriving from a bias current $I_{bias}$ supplied by a bias circuit, for example of the type illustrated in figure 3 and described above. Switches in the current mirrors making up the array of current sources 501 are provided by cascode transistors.

Switches 502, 503 driven by switching signais $en_1$, $en_2$, make it possible to apply either a PTAT voltage $V_{\Sigma\Delta}=\pm\Delta V_{be}$ or a CTAT voltage $V_{\Sigma\Delta}=\pm V_{be}$ to the sampling capacitor $C_{a1,2}$ of a 1st order $\Sigma\Delta$ ADC 505. To prevent this capacitive load from making the bias loop unstable, diode-connected BJTs $Q_{3,4}$ may also be used to lower the impedance at the base of $Q_{1,2}$, these transistors $Q_{3,4}$ being connected between respective outputs of the feedback amplifier 506, 507 having inputs connected to the sensing transistors $Q_1$, $Q_2$ and the emitter nodes of the sensing transistors. PMOS transistors 508, 509 are connected between the outputs of the amplifiers 506, 507 and the diode-connected BJTs $Q_{3,4}$, resulting in inversion of the outputs of the amplifiers. Collector and base connections of transistors $Q_3$, $Q_4$ are connected to respective base connections of transistors Q1, Q2 and to respective drain connections of PMOS transistors 508, 509. Gate connections of PMOS transistors 508, 509 are connected to respective outputs of amplifiers 506, 507, and source connections of PMOS transistors 508, 509 are switchably connected, via switches 510, 511, to voltage supply line $V_{dd}$. PMOS transistors 508, 509 function in a similar way to the common source buffers described above in relation to figure 3, and are used to deliver the large base currents to transistors $Q_1$ and $Q_2$. Thus, the transistors 508, 509 avoid the amplifiers 506 and 507 having to source the base currents. This arrangement provides for a simplified amplifier arrangement and avoids a systematic mismatch due to the current that would otherwise be provided by the amplifiers. The collectors of the sensing transistors $Q_{1,2}$ are connected to the inverting input of the amplifiers 506, 507 rather than the inverting input as shown in figure 4, due to the inversion provided by the PMOS transistors 508, 509. Further switches 510, 511 are connected between the supply voltage line 512 and the source connection of each PMOS transistor 508, 509, the switches 510, 511 controlled by the inverse of the switching signals applied to switches 502, 503. Gates of the PMOS transistors 508, 509 are connected to respective outputs of the feedback amplifiers 506, 507 and drains of the transistors 508, 509 are connected to respective bases of transistors $Q_1$, $Q_2$ as well as to respective bases and collectors of diode-connected transistors $Q_3$, $Q_4$.

In a general aspect therefore, the base and emitter connections of each of the first and second transistors $Q_1$, $Q_2$ are switchably connected by respective switches 502, 503 so as to selectively apply a voltage signal derived from one or both of the first and second transistors to the conversion circuit 505. Through using the switches 502, 503 (and the corresponding additional switches 510, 511 when the additional transistors $Q_3$, $Q_4$ and PMOS transistors 508, 509 are used), the temperature sensor circuit 500 requires only two sensing transistors to derive a temperature signal, rather than the three transistors used in the circuits of figures 1 and 4.

To generate a differential voltage signal $\Delta V_{be}$, sensing transistors $Q_{1,2}$ are biased at a 1:n collector current ratio, controlled by the switching arrangement of the current source array 501. A bitstream-controlled DEM (dynamic element matching) scheme is used to swap the current sources in a manner that is uncorrelated with the bitstream. Mismatch errors are thus averaged out without introducing in-band intermodulation products, resulting in a precise 1:n current ratio and, consequently, a precise $\Delta V_{be}$ [3]. To trim the sensor at room temperature, $V_{be}$ can be adjusted: the collector current of $Q_1$ or $Q_2$ can be coarsely adjusted via n-1 of the current sources, while the nth current source is driven by a digital $\Sigma\Delta$ modulator to provide a fine trim [3].

Conversion of the differential voltage output of the sensing transistors to a temperature signal in the sensor embodiment illustrated in figure 4 is implemented using a switched-capacitor $\Sigma\Delta$ converter. A switched-capacitor structure enables an easy implementation of the dynamic-element-matching techniques required for a high precision temperature sensor. The embodiment in figure 5 comprises a 1st-order switched-capacitor $\Sigma\Delta$ converter 505, of a similar type to that disclosed in references 3 and 4. When the output bitstream $bs$=1, $-V_{be}$ is integrated differentially in the integration capacitors $C_{b1,2}$. When the output bitstream $bs$=0, $\alpha\Delta V_{be}$ must be integrated. The input of the $\Sigma\Delta$ converter 505 can be either $V_{be}$ or $\Delta V_{be}$ and the factor $\alpha$ must be implemented in the first integrator. The factor $\alpha$ can be implemented in 2 different ways:

- the input capacitor of the integrator can be $C_{a1,2}=C_0$ when integrating $V_{be}$, and $Ca_{1,2}=\alpha C_0$ when integrating $\Delta V_{be}$, implementing a capacitive multiplication;
- the integration of $V_{be}$ is executed only once, while the integration of $\Delta V_{be}$ is repeated $\alpha$ times to implement the multiplicative factor.

To implement the first solution, a large array of capacitors and consequently a large chip area is needed. For the latter solution, less area is needed but the conversion time is longer because more integration cycles are needed. In the circuit of figure 5 the factor $\alpha$ is implemented according to the second technique outlined above. Further details of both techniques are described in reference 3.

In a exemplary embodiment of a temperature sensor comprising the bias circuit 300 of figure 3 and the temperature sensing circuit 500 of figure 5, the resistor $R_E$ is a polysilicon resistor of 180kΩ, the bias current supplied by each current source derived from $I_{bias}$ is 50nA, and the temperature sensing transistors $Q_1$, $Q_2$ are biased at a collector current ratio of 1:4.

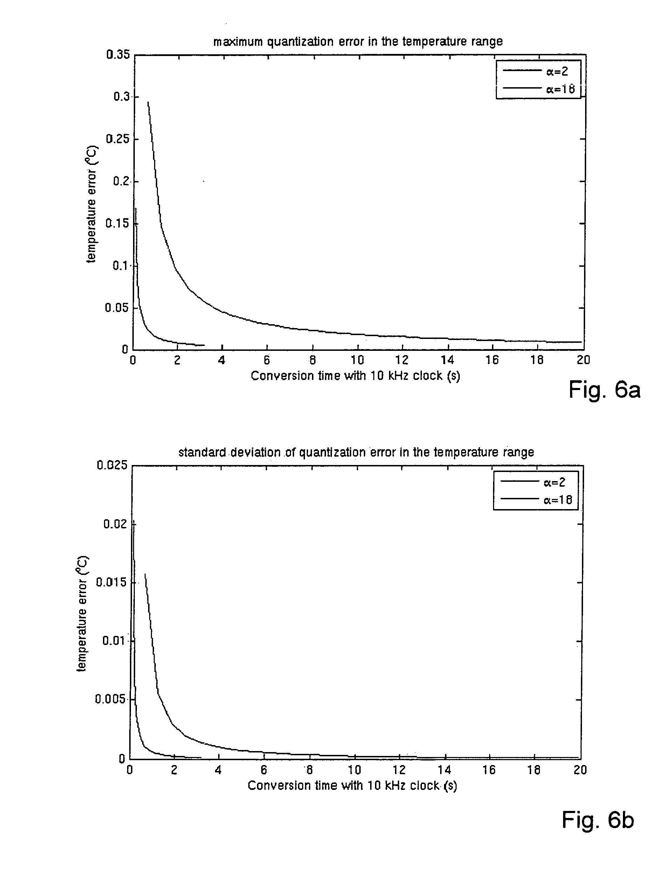

Figures 6a and 6b show the results of simulations of a $1^{st}$ order ΣΔ modulator with a $sinc^2$ decimation filter, for different values of α. Both the maximum quantization error (figure 6a) and the standard deviation of the quantization error (figure 6b) are lower for α=2 than for α=18 for any given conversion time.

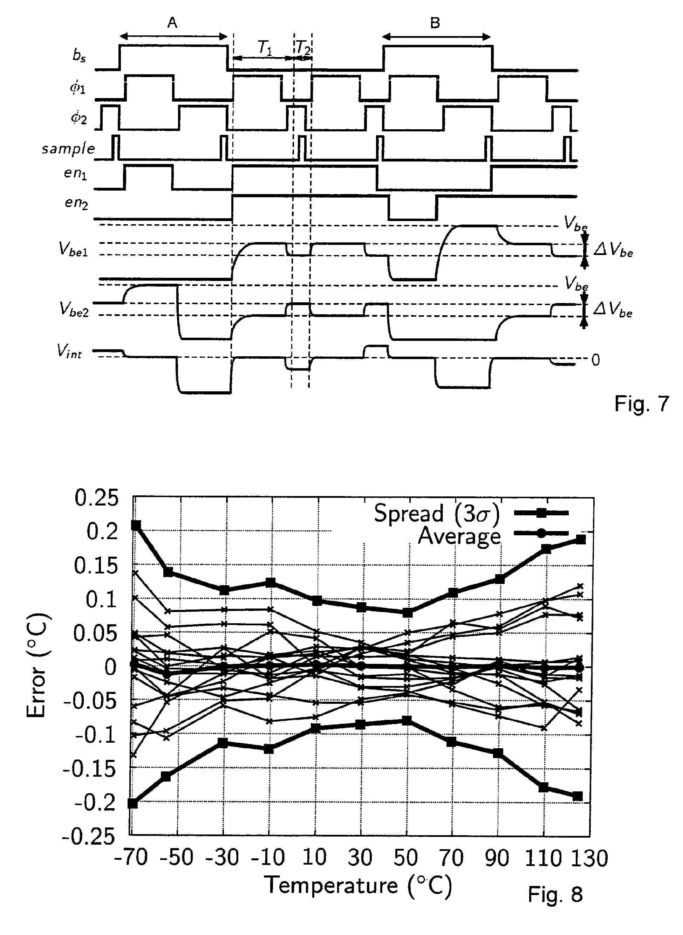

Figure 7 shows a timing diagram of a $1^{st}$-order ΣΔ modulator operating according to an aspect of the invention, the modulator comprising an integrator based on a 2-stage Miller-compensated op-amp with a minimum gain of 93 dB, which is reset at the beginning of each temperature conversion. Referring to the embodiment in figure 5, a reset signal is applied to reset switches 512, 513 at the beginning of each temperature conversion cycle. In practice, when a temperature reading is required the reset switches 512, 513 are closed, short-circuiting capacitors $C_{b1}$, $C_{b2}$. Once the reset switches are opened, the temperature conversion cycle begins. Correlated double sampling (CDS) is used to reduce the offset and 1/f noise. To enable the modulator to operate at a low supply voltage of 1.2V, the voltage swing at the output of the integrator was scaled by selecting $C_{b1}$, $C_{b2}$ to be equal to $C_{a1}$, $C_{a2}$ (figure 5). With the bitstream signal bs equal to 1, only one BJT is biased and only one base-emitter voltage $-V_{be}$ is integrated, compared to $-2V_{be}$ of previous implementations (see references 3, 4). An advantage of integrating in a single-ended fashion is that that lower supply voltages can be used.

The use of one base-emitter voltage means that whenever bs=1, a $V_{be}$-dependent common-mode voltage will also be integrated. To minimise the total integrated common-mode voltage, the sign of the input common-mode voltage is alternated in successive cycles where bs=1, by setting $V_{be1}$=0 and $V_{be2}$=$V_{be}$ when $\phi_1$ is high in a first cycle A or by setting $V_{be1}$=$V_{be}$ and $V_{be2}$=0 when $\phi_2$ is high in a second cycle B, as shown in the timing diagram of figure 7. A longer settling time is required when one input of the modulator must switch between $V_{be}$ and 0V when $\Delta V_{be}$ is being integrated than when one of the inputs must switch between $V_{be1}$ and $V_{be2}$ when $\Delta V_{be}$ is being integrated. To minimise on conversion time, the length of the various sampling phases is scaled appropriately, indicated by the different integration times $T_1$, $T_2$ in figure 7. A longer settling time $T_1$ is used when an input of the modulator switches between a larger voltage difference, for example between $V_{be}$ and 0V, and a shorter settling time $T_2$ is used when switching between a smaller voltage difference, for example between $V_{be1}$ and $V_{be2}$.

In summary, the use of a low value for α, for example α=2, together with a $sinc^2$ decimation filter, allows a reduction in quantization noise as compared with the use of a higher value for α. The value for α can in practice range from 1 upwards, but lower quantization errors are obtained using lower values. A value of 2 is straightforward to implement, for example using the circuit shown in figure 5 together with the waveforms of figure 7. A maximum value for α is determined by whether the output μ is a PTAT signal. In the exemplary embodiments herein, a value of 18 may be used, but other implementations may use a different value depending on process and circuit parameters. Given a certain process and circuit, there will be only one value of α that makes μ PTAT. In general, a value for α is chosen so that the output signal has a linear variation with temperature.

By using a small value for α, an advantage is that the resolution of the temperature sensor is improved, as shown for example by the results in figures 6a and 6b. A disadvantage is that the output μ may no longer be proportional to temperature, since if μ is PTAT for α=18, it will not be PTAT for a different value for α. This can be overcome by applying a non-linear compensation digital block after the temperature sensor to convert μ into an output signal that is proportional to temperature.

A particular preferred value of 2 for α is used in the embodiments disclosed herein, because this value is readily implemented by the type of circuits disclosed, the operation of which is shown in the timing diagram of figure 7.

The use of the above preferred value for α may also be applied to temperature sensor modules implemented using conventional PNP BJTs.

An exemplary 0.1 mm² temperature sensor according to the invention was fabricated in a baseline TSMC 65nm CMOS process, and packaged in a ceramic DIL package. The sensor's performance is summarized in table 1 below. Even though all the transistors are thickoxide high-threshold devices, the sensor draws 8.3μA from a supply of only 1.2V. The off-chip digital back-end decimates the output of the ΣΔ modulator with a $sinc^2$ filter and compensate for the non-linearity. The conversion rate of the sensor is 2.2 samples per second (6000 bits, with $T_1$=20μs, $T_2$=50μs) at which it obtains a quantization-noise-limited resolution of 0.03°C. Higher conversion rates can be reached with a 2nd order modulator [3,4]. This only requires the addition of an integrator and will not significantly increase the sensor's area or power dissipation.

A set of such devices was measured over the temperature range from -70°C to 125°C. After digital compensation for systematic non-linearity, the inaccuracy was determined to be ±0.5°C (3σ, 12 devices). This improved to ±0.2°C (3σ, 16 devices) after trimming at 30°C. These results are shown in figure 8. These results demonstrate that accurate low power and low-voltage temperature sensors can be designed and implemented in deep-submicron CMOS processes.

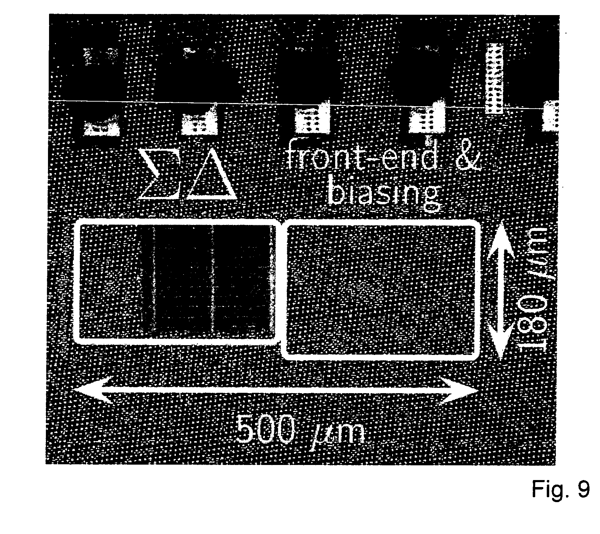

A micrograph of the exemplary temperature sensor module described above is shown in figure 9. The module, including the front-end temperature sensing circuit, bias circuit and $\Sigma\Delta$ converter, occupies a footprint of approximately 500 $\mu$m x 180 $\mu$m, taking up a total area of around 0.1 mm$^2$.

Table 1: Summary of performance of an exemplary embodiment, as compared with devices in references 2 and 4.

| Reference | This work | [2] | [4] |
|---|---|---|---|
| Technology | 65nm CMOS | 32nm CMOS | 0.7$\mu$m CMOS |
| Chip area | 0.1mm$^2$ | 0.02mm$^2$ | 4.5mm$^2$ |
| Supply current | 8.3$\mu$A | 1.5mA | 25$\mu$A |
| Supply voltage | 1.2 - 1.3V | 1.05V | 2.5 - 5.5V |
| Supply sensitivity | 0.9/-1.2°C/V | N.A. | 0.05°C/V |
| Output rate | 2.2Sa/s | 1kSa/s | 10Sa/s |
| Resolution | 0.03°C | 0.15°C (1$\sigma$) | 0.025°C (1$\sigma$) |
| Temperature range | -70°C - 125°C | -10°C - 110°C | -55°C - 125°C |
| Inaccuracy (untrimmed) | 0.5°C (3$\sigma$) | <5°C | 0.25°C (3$\sigma$) |
| Inaccuracy (trimmed) | 0.2°C (3$\sigma$) | N.A. | 0.1°C (3$\sigma$) |

**References**

[1] D.Duarte et al., "Temperature sensor Design in High volume manufacturing 65nm CMOS Digital Process," IEEE Custom Integrated circuits Conf., pp. 221-224, Sep., 2007.
[2] Y.W.Li et al., "A 1.05V 1.6mW 0.45°C 3$\sigma$-Resolution $\Delta\Sigma$-basted Temperature Sensor with Parasitic-Resistance Compensation in 32nm CMOS," ISSCC Dig. Tech. Papers, pp. 340-341, Feb., 2009.
[3] M.Pertijs et al., "A CMOS Temperature Sensor with a 3$\sigma$ Inaccuracy of $\pm$0.1°C from -55°C to 125°C," ISSCC Dig. Tech. Papers, pp. 238-239, Feb., 2005.
[4] A.L.Aita et al., "A CMOS Smart Temperature Sensor with a Baich-Caiibrated inaccuracy of $\pm$0.25°C (3$\sigma$) from -70°C to 130°C," ISSCC Dig. Tech. Papers, pp. 342-343, Feb., 2009.
[5] J.P.Kim et al., "A Low-Power 256-Mb SDRAM With an On-Chip Thermometer and Biased Reference Line Sensing Scheme", IEEE Journal of Solid-State Circuits, Vol. 48, No. 2, February 2003, pp 329-337.
[6] US 2007/0182478
[7] US 2009/0110027
[8] US 4165642

**Claims**

1. A temperature sensor module (400) for a CMOS integrated circuit, the temperature sensor module (400) comprising:

   a temperature sensing circuit (107) comprising first and second bipolar junction transistors (402, Q$_1$, Q$_2$);
   a bias circuit (106) connected to the first and second transistors and configured to provide first and second bias currents to the first and second transistors respectively;
   a conversion circuit (108) connected to the transistors and configured to provide an output signal corresponding to a temperature of the first and second transistors derived from the base-emitter voltages across the first and second transistors,
   wherein the first and second transistors are each of NPN type and a feedback amplifier (403) is connected between the base and collector connections of each transistor.

2. The temperature sensor module of claim 1 wherein the conversion circuit (108) comprises a $\Sigma\Delta$ converter (105, 505) connected to the base connections of the first and second transistors (Q$_1$, Q$_2$).

3. The temperature sensor module (400) of claim 2 wherein the base connections of the first and second transistors

($Q_1$, $Q_2$) are connected to respective first and second inputs of the $\Sigma\Delta$ converter (505).

4. The temperature sensor module of claim 3 comprising first and second switches (502, 503) connected between the base and emitter connections of the first and second transistors ($Q_1$, $Q_2$) respectively.

5. The temperature sensor module of any one of claims 2 to 4 wherein the converter (505) is configured to alternate the sign of an input common-mode voltage from the first and second transistors in successive sampling cycles.

6. The temperature sensor module of any one of claims 2 to 5 wherein the converter (505) is configured to integrate over a shorter length of time when switching inputs between base-emitter voltages of the first and second transistors than when switching between the base-emitter voltage ef one of the transistors and 0V.

7. The temperature sensor of any preceding claim comprising a PMOS transistor (508, 509) and further bipolar junction NPN transistor ($Q_3$, $Q_4$) connected between the output of each amplifier (506, 507) and the emitter of each of the first and second transistors ($Q_1$, $Q_2$).

8. The temperature sensor module of any preceding claim wherein the bias circuit (300) is configured to provide a bias current ($I_{bias}$) that is proportional to absolute temperature.

9. The temperature sensor module of claim 8 wherein the bias circuit (300) comprises third and fourth bipolar junction NPN transistors (Qa, Qb) connected to a cascode mirror (301) configured to provide collector currents to the third and fourth transistors at a fixed ratio, the emitter of the fourth transistor connected to a resistor to provide a voltage across the resistor that is proportional to absolute temperature.

10. The temperature sensor module of any preceding claim wherein the conversion circuit is configured to implement a multiplicative factor when integrating a differential voltage signal from the first and second transistors.

11. The temperature sensor module of claim 10 wherein the conversion circuit is configured to implement the multiplicative factor by integrating the differential voltage signal multiple times for each sampling cycle.

12. The temperature sensor module of claim 10 wherein the multiplicative factor is 2.

13. A method of measuring temperature in a temperature sensing module according to claim 1, the method comprising:

generating a bias current ($I_{bias}$) in the bias circuit (106);
providing the blas current to the temperature sensing circuit (107);
receiving the base-emitter voltages across the first and second transistors by the conversion circuit (108); and
generating an output signal corresponding to a temperature of the first and second transistors derived from the base-emitter voltages across the first and second transistors.

14. The method of claim 13 wherein the conversion circuit implements a multiplicative factor when integrating a differential voltage signal from the first and second transistors.

15. The method of claim 14 wherein the multiplicative factor is 2.

Fig. 1

Fig. 2

Fig. 3

Fig. 4

Fig. 5

Fig. 6a

Fig. 6b

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070182478 A
- US 20090110027 A
- US 4165642 A

### Non-patent literature cited in the description

- **D.Duarte et al.** Temperature sensor Design in High volume manufacturing 65nm CMOS Digital Process. *IEEE Custom Integrated circuits Conf.,* September 2007, 221-224
- **Y.W.Li et al.** A 1.05V 1.6mW 0.45°C 3σ-Resolution ΔΣ-basted Temperature Sensor with Parasitic-Resistance Compensation in 32nm CMOS. *ISSCC Dig. Tech. Papers,* February 2009, 340-341
- **M.Pertijs et al.** A CMOS Temperature Sensor with a 3σ Inaccuracy of ±0.1°C from -55°C to 125°C. *ISSCC Dig. Tech. Papers,* February 2005, 238-239
- **A.L.Aita et al.** A CMOS Smart Temperature Sensor with a Baich-Caiibrated inaccuracy of ±0.25°C (3σ) from -70°C to 130°C. *ISSCC Dig. Tech. Papers,* February 2009, 342-343
- **J.P.Kim et al.** A Low-Power 256-Mb SDRAM With an On-Chip Thermometer and Biased Reference Line Sensing Scheme. *IEEE Journal of Solid-State Circuits,* February 2003, vol. 48 (2), 329-337